# EUROPEAN PATENT APPLICATION

(11) **EP 4 789 533 A1**
(43) Date of publication of application: **12.08.2026**
(21) Application number: 25156546.1
(22) Date of filing: 07.02.2025
(51) Int. Cl.: A01G 9/033, B31D 3/00, E04C 2/36, E04D 11/00, E04D 13/04

(54) **WATER RETENTION AND DISTRIBUTION UNIT**

(71) Applicant: Carl Freudenberg KG, 69469 Weinheim (DE)
(72) Inventor: Abdelwahed, Boutheina, North Carolina, Raleigh 27603 (US); Khedimi, Achraf, 68000 Colmar (FR)

(57) **Abstract**

The invention relates to a water retention and distribution unit comprising a water retention device (1) in the form of at least one plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein at least one side (5) of the plate (2) is at least partly covered by a first capillary medium (6) which comprises a first nonwoven fabric wherein the first capillary medium (6) is bonded to at least one side (5) of the plate (2).

## Description

The present invention relates to a water retention and distribution unit comprising a water retention device in functional combination with a nonwoven fabric. The present invention also relates to the use of the unit for moisture management.

Water retention and distribution units are essential components in water management technologies such as irrigation technologies or blue roofing and are configured to manage and optimize the use of water. Blue roofing refers to technologies that use water retention and distribution systems to temporarily store and control the release usually of rainwater. For blue roofing technology water distribution is important because it ensures efficient water management, preventing structural damage from localized pooling. In the blue roofing technologies water retention and distribution units are used to temporarily store rainwater and control its release, helping to mitigate urban flooding and manage stormwater runoff. Water retention and distribution also enhances cooling by promoting even evaporation and supports any integrated vegetation by providing consistent hydration. This helps optimize the overall performance of the blue roof system.

The purpose of irrigation technologies such as green roofing or vertical gardening technologies is to ensure that green roofs or vertical gardens have a consistent supply of moisture to support plant growth. Also for irrigation technologies, water retention and distribution units are useful because they can effectively manage excess water to prevent waterlogging and structural damage. In addition, they can evenly disperse water e.g. across the roof, ensuring that all areas receive adequate hydration. This helps maintain uniform plant health and prevents dry spots, which can compromise the integrity and aesthetic of the green roof.

To meet these objectives, water retention and distribution units must perform several key functions. They need to retain enough water to sustain plant life during dry periods, reducing the need for additional irrigation. Additionally, they must facilitate the quick removal of excess water to prevent waterlogging, which can damage both the plants and the structural integrity of the roof. For this purpose, they advantageously include a water distribution mean.

Water retention and distribution units advantageously also include filtration mechanisms to prevent soil and debris from clogging the water retention device and the drainage system, ensuring long-term functionality and efficiency. Additionally, they need to support the weight of the growing medium and plants, distributing it evenly across the roof surface to prevent damage.

By integrating these functions, water retention and distribution units play a crucial role in enhancing the sustainability and performance of green and blue roofs, contributing to environmental benefits such as improved insulation, reduced urban heat island effect, and effective stormwater management.

An important feature of the water retention and distribution unit is a water retention device. The water retention device serves several key purposes. For blue roofing it shall temporarily store excess water during heavy rainfall, preventing immediate runoff and reducing the risk of flooding. Additionally, it shall ensure that the stored water is released at a controlled rate, which helps to avoid overwhelming drainage systems and downstream infrastructure. This controlled release is crucial for effective flood mitigation in both urban and rural areas.

The water retention device typically includes several empty volumes for water retention with openings on the top surface of the device. The openings facilitate the efficient collection of rainwater directly into the device, enhancing its capacity to manage large volumes of water during heavy rainfall. Furthermore, the top opening allows for easier maintenance and inspection, ensuring the unit remains functional and effective over time. Furthermore, the water retention device may be configured as one or more conventional containers configured to hold water. Commercially used water retention devices are plates comprising a plurality of recessed cavities. Alternatively, they can be open spacer constructions, wherein the base and/or sides are covered by a water-impermeable barrier e.g. formed by a layer in the soil when in use.

For green roofing applications, the water retention and distribution unit helps to manage the water supply for the vegetation on green roofs, ensuring that plants receive adequate moisture during dry periods. The unit can store rainwater and release it slowly, providing a consistent water source that supports plant health and growth. This function not only enhances the aesthetic and environmental benefits of green roofs but also contributes to urban cooling and improved air quality. By integrating with green roofing systems, the water retention and distribution unit further promotes sustainable urban development and ecological balance.

For water distribution usually geotextiles are used. Geotextiles are textiles that are used in association with soil. Mostly, they are permeable to water. Usually, they are in the form of woven, nonwoven or composite fabrics. In water retention and distribution systems geotextiles can serve various purposes such as separation, drainage, filtering, reinforcement, protection, and erosion control.

Geotextiles can be used as capillary substrate (capillary geotextiles). Specifically, capillary geotextiles can be used to pick up water from a water source such as a water reservoir, a rain collector or a water pipe and to distribute it over its surface (in plane). Capillary geotextiles are used in many fields where water distribution is important such as green roofing, blue roofing and vertical gardening. In green roofing and vertical gardening, the capillary geotextiles usually are positioned between a vegetative layer and a water source. By connecting the capillary geotextiles with the water source water can be transported to the geotextile, distributed therein and released to the vegetative layer.

Generally, capillary geotextiles should have a high capillarity in order to distribute the water efficiently and quickly. Capillary geotextiles should also have open pores that enable water to flow through. Therefore, they should not be too dense. On the other hand, capillary geotextiles should be able to retain particles and pollutants. Such filtration process helps to prevent clogging of the drainage system.

It is known that textile fabrics, such as nonwoven fabrics are well suited for capillary geotextiles. Nonwoven fabrics are materials made from fibers such as staple fibers (with a defined length) and/or filaments (theoretically continuous), bonded together by chemical, mechanical, heat and/or solvent treatment. The term is used in the textile manufacturing industry to denote textile fabrics, which are neither woven nor knitted. Nonwoven fabrics are described in ISO 9092:2019.

WO2024056522 (A1) describes a module comprising a grid plate with a honeycomb structure, having a rectangular or square outline with polyhedral cells, and a sheet of nonwoven material attached to the upper face of the plate, covering it entirely with an overhang on at least two sides. The nonwoven material has water capillarity properties and includes at least one lateral portion extending beyond the edge to the lower face, acting as a wick for liquid rise by capillarity. A preferred nonwoven material is composed of a mixture of polyamide and polyester microfibers linked together. Disadvantageous of the module described is that it does not allow to flexibly shape its form and to simultaneously maintain structural flexibility.

The object underlying the present invention is to provide an improved water retention and distribution unit that provides good moisture management and is capable of being formed into desired shapes without compromising its structural integrity.

This object is achieved by a water retention and distribution unit comprising a water retention device in the form of at least one plate with a three-dimensional structure that creates at least one empty volume for at least temporarily retaining water wherein the at least one empty volume includes at least one opening on at least one side of the plate, allowing water to enter the empty volume, wherein at least one side of the plate is at least partly covered by a first capillary medium which comprises a first nonwoven fabric, and wherein the first capillary medium is bonded to at least one side of the plate.

The inventive water retention and distribution unit comprises a first capillary medium which comprises a first nonwoven fabric. Preferably, the first nonwoven fabric comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex.

The first capillary medium is bonded to at least one side of a plate which is three-dimensionally structured to form a water retention device.The bonding results in excellent adhesion between the fabric and the plate, ensuring that the first capillary medium remains securely attached regardless of the plate's shape. The bonding thus allows a structure where the first nonwoven fabric adheres firmly and permanently to the plate although it has an irregular surface. The bonding therefore allows for versatile shaping of the water retention and distribution unit, as it can be formed into any desired configuration without compromising the integrity of the bonding between the plate and the first capillary medium. In contrast, in commercially available water retention and distribution units geotextiles are usually only laid upon the water retention device. It was surprising that bonding does not block the pores of the nonwoven fabric, allowing it to retain its permeability, which is crucial for its water management properties.

In a preferred embodiment the bonding between the first capillary medium and the plate is achieved using heat, pressure, and/or adhesive. Preferred is bonding using heat and most preferred using heat and pressure. These bonding methods create strong, long-lasting bonds that improve the structural integrity of the first capillary medium. Thermal bonding minimizes the use of chemicals, making it an environmentally friendly option compared to chemical bonding methods. The process is also efficient and cost-effective. Furthermore, it can be applied to various types of first capillary media, making it versatile for different applications. The use of heat and pressure can also enhance the aesthetic quality of the fabric by creating smooth, uniform surfaces.

In a particularly preferred embodiment the bonding is achieved using heat, in particular heat and pressure, wherein the first capillary medium is thermally bonded to the plate in that at least parts of the surface of at least one side of the plate have been at least partly melted and the first capillary medium has been applied to the melted surface while it was still in the molten state. Preferably, pressure has been applied during the bonding to enhance the bond strength and uniformity. In a further preferred embodiment the first capillary medium has not been melted during the thermal bonding process. This is advantageous as it helps to keep the pores of the first capillary medium unblocked.

In a preferred embodiment of the invention the melting point of the first capillary medium is at least 15°C, preferably at least 20°C, in particular at least 30°C higher than the melting point of the plate. This ensures that the first capillary medium does not melt during the thermal lamination process so that the open pore structure of the first capillary medium is not blocked by the thermal bonding. Melting points can be measured according to ISO 11357-3 (2018). In case the plate and/or the first capillary medium is made of more than one material the relevant melting point of both, the first capillary medium and the plate, is the melting point of the lowest melting material respectively.

In a further preferred embodiment, the melting point of the plate is from 80 °C to 200 °C, preferably 100 °C to 170 °C. Further preferred, the melting point of the first capillary medium is from 160 °C to 280 °C, preferably 220 °C to 260 °C. In case the plate and/or the first capillary medium is made of more than one material the relevant melting point of both, the first capillary medium and the plate, is the melting point of the lowest melting material respectively.

If the plate has two structurally distinct sides, with one side being more suitable for water retention than the other, the side more suitable for water retention is designated as the water retention side of the plate.

In a preferred embodiment, at least 50%, preferably from 60% to 100%, more preferably from 70% to 100%, of the surface area of at least one side of the plate, in particular of the water retention side of the plate, are covered by the first capillary medium. This allows for a sufficient water retention and distribution capacity. The surface area of a side of the plate refers to its entire surface area, including the surface area of the empty volumes. Accordingly, it encompasses all parts of the surface, not just the horizontal sections.

In a further preferred embodiment at least 50%, preferably from 60% to 100%, more preferably from 70% to 100%, of the surface area of at least one side of the plate, in particular of the water retention side of the plate, are bonded to the first capillary medium. This allows for a good adhesion of the first capillary medium.

The plate has a three-dimensional structure that creates at least one empty volume. This empty volume allows to at least temporarily retain water. The empty volume has at least one opening on at least one side of the plate, so that water can enter the empty volume. Preferably, the at least one opening is on the water retention side of the plate. This allows the collection of rainwater by the water retention device. Preferably, the three-dimensional structure creates a plurality of empty volumes.

The three-dimensional structure of the plate can be selected from geometries exhibiting cavities, protuberances, and/or depressions. For example, the three-dimensional structure may include sinusoidal or undulating profiles, internal voids, e.g. by forming a structure that resembles that of an egg carton or recesses such as pockets or hollows, elevated sections such as ridges or bosses, and indented areas including grooves or dimples. In a preferred embodiment the three-dimensional structure includes internal voids, preferably by taking a form that resembles that of an egg carton. A structure that resembles that of an egg carton comprises a series of alternating upwardly and downwardly curved or angular surfaces. Furthermore, the plate can feature complex surface geometries that integrate a combination of ridges, curved surfaces, hollows, and other non-uniform shapes. These three-dimensional structures can create empty volumes through the arrangement and interaction of cavities, protuberances, and depressions, thereby creating functional spaces that can be utilized for water storage. For forming the at least one empty volume, the three-dimensional structure can also interact with external components, such as water-impermeable layers in the soil. Preferably, the three-dimensional structure is a geometry exhibiting cavities which create the at least one empty volume. According to a preferred embodiment of the invention, the three-dimensional structure is integrally formed within the plate through a molding process.

In a further preferred embodiment, the water retention device includes channels designed for drainage and/or ventilation. The channels can be positioned at the apex of at least one upwardly curved or angular section and/or at the nadir of at least one downwardly curved or angular section. Preferably, the channels are positioned at the apex of at least one upwardly curved or angular section. In this context, "upwardly" refers to the direction towards the water retention side, while "downwardly" refers to the opposite direction.

The first capillary medium at least partly covers at least one side of the plate. It assists in the water retention and distribution. In a prefered embodiment the first capillary medium at least partly covers the water retention side. In an embodiment of the invention the first capillary medium is positioned flat on at least one side of the plate. In a preferred embodiment the first capillary medium comprises at least one lateral portion which extends beyond the edge and along the side of at least one of the lateral sides of the plate said lateral portion of first capillary medium constituting a wick for the rise of liquid by capillarity towards the part of the first capillary medium resting on at least one side of said plate. This embodiment is particularly advantageous if the first capillary medium is positioned flat on at least one side of the plate.

In a preferred embodiment the first capillary medium conforms at least partly to the three-dimensional structure of the plate. In a particularly preferred embodiment the plate is shaped in the manner of an egg carton and the first capillary medium conforms at least partly to the upwardly and downwardly curved or angular sections of the egg carton shape of the plate. This embodiment is made possible by the bonding of the first capillary medium to at least one side of the plate and can not be achieved with systems where a geotextile is only laid on the upper side of a plate. Furthermore, it offers several advantages such as a more even distribution of water, enhancing the efficiency of water retention and reducing dry spots. By fitting closely to the device, the first capillary medium provides better stability and reduces the risk of displacement, which is common with flat geotextiles. Additionally, the conforming first capillary medium is less prone to wear and tear, as it reduces the stress points that typically occur with flat materials. The three-dimensional conformity simplifies the installation process, as it naturally fits the contours without requiring extensive adjustments. Finally, it allows to dispense with any additional vertically arranged capillary media used in the prior art to connect the water reservoir with the geotextile.

In a particularly preferred embodiment parts of the first capillary medium extend into the interior of the empty volume. This allows to dispense with additional water conducting connections between the interior of the empty volume and the first capillary medium. Preferably, those parts of the first capillary medium which extend into the interior of the empty volume at least partly conform to and are bonded to the surface of the interior of the empty volume.

In a preferred embodiment the at least one empty volume is formed in that the plate is shaped in the manner of an egg carton and/or as an open spacer construction that contains a semi-enclosed space configured to hold water in combination with external sealing elements. In a particularly preferred embodiment the at least one empty volume is formed in that the plate is shaped in the manner of an egg carton.

In a further preferred embodiment the at least one empty volume is formed in that the plate is shaped to have a plurality of recessed cavities and/or a wave-like structure.

In a further preferred embodiment the at least one empty volume is formed in that the plate is shaped to have a plurality of recessed cavities. This allows forming an egg carton like structure. The recessed cavities create a plurality of empty volumes and thus allow to at least temporarily retaining water. This prevents the immediate drainage or loss of water. The empty volumes have openings on at least one side of the plate, allowing water to enter. Preferably, the empty volumes have openings on the water retention side. The openings thus serve as water inlets. This open-top design is advantageous as water can easily flow into the cavities from above, ensuring efficient collection and retention. In cases where the cavities reach their capacity, the open top design allows excess water to overflow. According to a further preferred embodiment of the invention, the cavities are interconnected, allowing for the effective distribution of water within the unit.

According to a further preferred embodiment of the invention, the recessed cavities are integrally formed within the plate through a molding process. This process involves shaping the plate material and allows to create precise and uniform cavities, ensuring consistent dimensions and placement. The molding technique provides a robust and seamless integration of the cavities into the plate, enhancing the structural integrity and functional performance of the final product. Additionally, this method allows for the formation of complex cavity geometries that can be tailored to specific application requirements.

The plate can be made from various materials such as plastic, metal, or composite materials. For example, a plastic plate might be used for lightweight applications, while a metal plate could be used for more durable, heavy-duty purposes. According to the invention it is preferred that the plate is made from a thermoformable plastic material, preferably having a melting point as explained above.

The recessed cavities can vary in shape (e.g. being honeycombshaped, cylindrical, conical, or hemispherical) and size to accommodate different volumes of water. For instance, cylindrical cavities might be used for holding larger volumes of water, while conical cavities could be configured to facilitate easier drainage. The cavities can be arranged in a regular grid pattern or in a more irregular, customized layout to suit specific applications. The surface of the plate can be treated with coatings or textures to enhance functionality. For example, a non-stick coating could be applied to prevent substances from adhering to the cavities, or a textured surface could be used to improve grip. In a further preferred embodiment, the recessed cavities can also include features for drainage or ventilation, such as channels.

The first capillary medium at least partly covers at least one side of the plate. It assists in the water retention and distribution. For making a water conducting connection the first capillary medium can comprise at least one lateral portion which extends beyond the edge and along the side of at least one of the lateral sides of the plate said lateral portion of first capillary medium constituting a wick for the rise of liquid by capillarity towards the part of the first capillary medium resting on at least one side of said plate.

According to a further embodiment of the invention the water retention and distribution unit comprises at least one second capillary medium which preferably is a second microfilament nonwoven fabric, which is arranged in water conducting connection with the first capillary medium and which extends beyond the edge and along the side of at least one of the lateral sides of the plate and/or which extends into the interior of the void volume thereby constituting a wick for the rise of liquid by capillarity towards the part of the first capillary medium resting on at least one face of said plate.

According to a preferred embodiment of the invention, the at least one empty volume, preferably a plurality of empty volumes, is formed in that the plate is shaped to have a plurality of recessed cavities, preferably in the manner of an egg carton, and the first capillary medium conforms at least partly to the structure of the cavities. Preferably, the first capillary medium is bonded to and at least partly covers the internal surfaces of the recessed cavities. The internal surfaces refer to the concave surface areas within the cavities, i.e. the concave surfaces of the cavity walls. This is advantageous because it allows water transport starting from the interior of the cavities without the need for an additional water-conducting connection because the first capillary medium may itself be in contact with the water contained in the interior of the cavities. In contrast, in known water retention and distribution units where the capillary fleece lays flat on plates with recessed cavities additional water-conducting connections are needed to allow water transport from the bottom of the cavities to the capillary fleece.

In a further embodiment the water retention and distribution unit comprises a third capillary medium. The third capillary medium may be structurally the same or different as the first and/or the second capillary medium. A preferred third capillary medium is a nonwoven fabric, in particular a microfilament nonwoven fabric. The third capillary medium is preferably positioned at least partly on top of the first capillary medium. Here, it can function as filter unit preventing soil to enter the cavities. The third capillary medium preferably lays flat in relation to the plane of the plate. It is advantageous if the third capillary medium is arranged on that side of the first capillary medium facing away from the water retention and distribution device. In a further embodiment the third capillary medium extends beyond the edge and along the side of at least one of the lateral sides of the plate.

In a further preferred embodiment the at least one empty volume is formed in that the plate is shaped as an open spacer construction. In this embodiment preferably at least one side of the plate is at least partly covered by a first capillary medium, preferably with an overhang on at least two lateral sides of said plate. More preferably the first capillary medium comprises at least one lateral portion which extends beyond the edge and along the side of at least one of said lateral sides of the plate said lateral portion of first capillary medium constituting a wick for the rise of liquid by capillarity towards the part of the first capillary medium resting on at least one face of said plate.

In a preferred embodiment, the water retention and distribution unit is configured to be modular. This means that multiple units can be interconnected to form a modular system with a water conducting connection between the units. A further subject of the invention is a modular water retention and distribution system comprising at least two water retention and distribution units with a water conducting connection between the units. This modular design facilitates easy expansion and customization, enabling the system to be tailored to specific water retention requirements.

According to the invention the first capillary medium comprises the first nonwoven fabric. Preferably the first nonwoven fabric is a spunbond nonwoven fabric, a needlpunched fabric, a spunlace fabric a wetlaid fabric and/or a knitted fabric. In a particularly preferred embodiment the first capillary medium is a first spunbond nonwoven fabric.

In a preferred embodiment the first nonwoven fabric comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex.

In a particularly preferred embodiment the first capillary medium is a first spunbond nonwoven fabric comprising first melt-spun composite filaments, which are splitted to at least some extent to produce first elementary filaments, having an average titer of at most 0.2 dtex.

This allows optimization for moisture management in that it provides for excellent water distribution capacity, allows for a long distance water transport while providing good mechanical properties.

In a preferred embodiment, the first nonwoven fabric comprises first fibers being first melt-spun composite fibers which are splitted to at least some extent to produce first elementary fibers having an average titer of at most 0.2 dtex. Preferably the average titer of the first elementary fibers ranges from 0.05 dtex to 0.2 dtex, more preferably from 0.08 dtex to 0.19 dtex, more preferably from 0.08 dtex to 0.15 dtex. Accordingly, the first fibers comprise fibers with a small titer. These small titer fibers are advantageous because, as explained above, they provide the nonwoven fabric with excellent capillarity in both directions i.e. in machine direction (MD) and in cross direction (CD), high water distribution capacity and controlled moisture management.

Composite fibers comprise at least two elementary fibers and can be splitted. Such splitting can be performed by customary splitting methods, such as fluid-jet bonding. Preferably, the first fibers are splitted by water-jets. Usually, simultaneously bonding of the elementary fibers takes place.

Preferably, the splitting degree of the first composite fibers is at least 90 %, more preferably, at least 95 %, in particular at least 98 %. The splitting degree of the fibers can be measured optically through a microscopic image (magnification 750) of the cross sectional cut of the nonwoven. Partially splitted fibers are considered as unsplitted fibers. At least 10 microscopic images shall be made and examined, and the average splitting degree shall be taken.

In a further preferred embodiment of the invention the first nonwoven fabric has a thickness measured according to DIN EN ISO 9073-2:1997-02 from 0.05 mm to 1 mm, preferably, from 0.05 mm to 0.5 mm.

The term "fibers" is understood to comprise both, filaments and staple fibers. Preferably, the first fibers are filaments. The term "filaments" is understood to mean fibers which, in contrast to staple fibers (i.e. fibers with a specific length), have a theoretically unlimited length. According to the invention, filaments are preferred fibers because they allow for a longer distance water transport and a more uniform water flow as staple fibers. Fibers can also be in the form of yarns. This is advantageous because it allows the use of recycled fabrics.

In a preferred embodiment of the invention the first capillary medium consists of first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex.

In a preferred embodiment of the invention the first capillary medium is a nonwoven composite fabric comprising at least one layer A and at least one layer B, wherein layer A is the first nonwoven fabric and wherein
a) layer A comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex;
b) layer B comprises
   b1) second fibers, preferably second filaments, with an average titer from 0.25 to 10 dtex, preferably 0.25 to 3.5 dtex, or
   b2) a woven grid comprising yarns having an average titer from 500 dtex to 2200 dtex, preferably from 800 dtex to 2200 dtex, or
   b3) second fibers, preferably second filaments, with an average titer from 0.25 to 10 dtex and a woven grid comprising yarns having an average titer from 500 dtex to 2200 dtex.

This embodiment is advantageous because the nonwoven composite fabric comprises thicker fibers in synergistic combination with thinner fibres.

In practical experiments it was found that the nonwoven composite fabric has a more rapid water uptake, better water transportation, in particular better water distribution capacity as compared to needle-punched products which do not contain microfibers. Specifically, the nonwoven composite fabric allows for a longer and more uniform distance water transport and also provides outstanding mechanical properties even at low grammages.

It is believed that the excellent water management capacities, in particular the high capillarity in plane, i.e. in X/Y-direction of the nonwoven composite fabric, are at least partly due to the presence of the microfibers of layer A which create an interconnected capillary network in the product. Through this network water can move in plane.

It is further believed that water uptake is synergistically improved by the presence of layer B which has fibers with a higher titer leading to a fiber titer gradient in Z-direction of the nonwoven composite fabric.

In the inventive water retention and distribution unit the nonwoven composite fabric can act as a water distribution and filtration medium, distributing water and simultaneously preventing debris and contaminants from passing through the unit.

In a preferred embodiment the amount of the first fibers is not below 10 wt.% based on the total weight of the nonwoven composite fabric because this allows for a good water uptake and particle filtration capacity. In a further preferred embodiment it is advantageous that the amount of the first fibers is not higher than 35 wt.% based on the total weight of the nonwoven composite fabric because the presence of the first fibers increases density.

In addition, it was found that the nonwoven composite fabric is highly effective in preventing clogging. This allows good drainage and specifically enables water to flow through the nonwoven composite fabric while it can still retain particles and pollutants. Without wishing to be bound by theory it is believed that layer B improves clogging resistance because it has a more open pore structure than layer A.

Furthermore, it was found that the second fibers and/or the yarns are advantageous for preventing clogging. Specifically, in a further preferred embodiment the amount of the second fibers is not below 65 wt.% and/or the amount of the yarn is not below 20 wt.% based on the total weight of the nonwoven composite fabric. This is beneficial for enhancing clogging resistance and exploiting the effect of a titer gradient. On the other hand, it is preferred if the amount of the second fibers and/or the yarns is not higher than 90 wt.% based on the total weight of the nonwoven composite fabric because this allows for a sufficient amount of microfibers. In addition, the presence of the second fibers and/or the yarns improves the mechanical properties even at lower grammage.

As a consequence, the combined presence of fibers with a small titer and fibers/yarns with a higher titer within the nonwoven composite fabric allows for excellent water distribution and filtration properties whereas clogging can be avoided. It is believed that it is the presence of the second fibers and/or the yarns that helps clogging to be avoided. Furthermore, in combination with the first fibers they allow to provide the nonwoven composite fabric with a titer gradient, as explained more in detail below, which in turn is advantageous for the water uptake and capillarity properties of the nonwoven composite fabric.

Layer A corresponds to the first nonwoven fabric, in particular the first nonwoven fabric comprising first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex. The preferred embodiments described for layer A are also applicable to the first nonwoven fabric, in particular the first nonwoven fabric comprising first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex. Conversely, the preferred embodiments described herein for the first nonwoven fabric are also applicable to the layer A mutatis mutandis.

According to the invention, layer A comprises first fibers being first melt-spun composite fibers which are splitted to at least some extent to produce first elementary fibers having an average titer of at most 0.2 dtex. Preferably the average titer of the first elementary fibers ranges from 0.05 dtex to 0.2 dtex, more preferably from 0.08 dtex to 0.19 dtex, more preferably from 0.08 dtex to 0.15 dtex. Accordingly, the first fibers comprise fibers with a small titer. These small titer fibers are advantageous because, as explained above, they provide the nonwoven composite fabric with excellent capillarity in both directions i.e. in machine direction (MD) and in cross direction (CD), high water distribution capacity and controlled moisture management.

Preferably, the first fibers and the second fibers are filaments. Further preferably, the yarns comprise filaments. The term "filaments" is understood to mean fibers which, in contrast to staple fibers (i.e. fibers with a specific length), have a theoretically unlimited length. According to the invention, filaments are preferred fibers because they allow for a longer distance water transport and a more uniform water flow as staple fibers. Fibers can also be in the form of yarns. This is advantageous because it allows the use of recycled fabrics.

The term "yarn" is understood to be a continuous strand of staple and/or filament fibers arranged in a form suitable for weaving, knitting, or other form of fabric assembly. Preferably, the yarns comprise filaments. Structural integrity of the yarns can be obtained by adding a slight twist to the strand of fibers. Alternatively, structural integrity can be obtained by entanglement e.g. by an air jet. Preferred yarns comprise thermoplastic polymers, such as polyester, polyolefine and/or polyamide. Preferred polymers are polyester, in particular PET. Specifically the yarns consist of one or more of these polymers.

In a preferred embodiment of the invention the amount of the first fibers is 10 wt.% to 35 wt.%, more preferably 15 wt.% to 30 wt.%, more preferably 20 wt.% to 30 wt.%, based on the total weight of the nonwoven composite fabric.

In a further preferred embodiment of the invention b1) the amount of the second fibers is 65 wt.% to 90 wt.%, more preferably 70 wt.% to 85 wt.%, more preferably 70 wt.% to 80 wt.% based on the total weight of the nonwoven composite fabric.

In a further preferred embodiment of the invention b2) the amount of the yarns is 20 wt.% to 90 wt.%, preferably 70 wt.% to 85 wt.% based on the total weight of the nonwoven composite fabric, more preferably 70 wt.% to 80 wt.%.

In a further preferred embodiment of the invention b3) the combined amount of the second fibers and of the yarns is 65 wt.% to 90 wt.%, 70 wt.% to 85 wt.%, more preferably 70 wt.% to 80 wt.% based on the total weight of the nonwoven composite fabric.

In a further preferred embodiment of the invention at least one surface layer of the nonwoven composite fabric is formed by layer A. More preferably, both surface layers of the nonwoven composite fabric are formed by layers A. This allows the first fibers to be present on the surface of the nonwoven composite fabric. This is advantageous because the small fiber titer of the first elementary fibers enhances capillarity, water transportation, in particular water distribution capacity and moisture management of the nonwoven composite fabric. These properties are particularly relevant at the surface of the nonwoven. Furthermore, the presence of layer A at the surface of the nonwoven composite fabric allows it to better trap contaminations such as dirt particles from the water than commercial products.

In case one surface layer of the nonwoven composite fabric is formed by layer A and the other surface layer is formed by layer B, preferably layer B is in contact with the water retention device.

The first fibers are first melt-spun composite fibers which are splitted to at least some extent to produce first elementary fibers, preferably first elementary filaments, having an average titer of at most 0.2 dtex. Due to the small titer of the first elementary fibers the layer A can be considered as microfiber layer.

In a preferred embodiment of the invention the nonwoven composite fabric comprises at least one layer A and at least one layer B, wherein layer A is the first nonwoven fabric, wherein
a) layer A comprises first fibers, preferably first filaments, being first melt-spun composite fibers which are splitted to at least some extent to produce first elementary fibers having an average titer of at most 0.2 dtex,
b) layer B comprises b1) second fibers, preferably second filaments, with an average titer from 0.25 to 10 dtex, preferably 0.25 to 3.5 dtex,
   - wherein at least one, preferably both surface layer(s) of the nonwoven composite fabric is/are formed by layer A and
   - wherein the amount of the first fibers is 10 wt.% to 35 wt.% based on the total weight of the nonwoven composite fabric and
   - wherein the amount of the second fibers is 65 wt.% to 90 wt.% based on the total weight of the nonwoven composite fabric.

Layer B comprises in option b1) second fibers, preferably second filaments, with an average titer from 0.25 to 10 dtex, preferably from 0.5 to 10 dtex, more preferably from 1 to 10 dtex, more preferably from 2 to 8 dtex, more preferably from 2.4 to 8 dtex, more preferably from 2.4 to 5 dtex, in particular from 2.4 to 3.5 dtex. The second fibers can be second melt-spun composite fibers and/or melt-spun monofibers each with an average titer from 0.25 to 10 dtex.

In option b1) Layer B can be a woven fabric, a nonwoven fabric, preferably a spunbond nonwoven fabric, a needlpunched fabric, a spunlace fabric a wetlaid fabric, and/or a knitted fabric.

Preferably the second fibers are second melt-spun composite fibers which are splitted to at least some extent to produce second elementary fibers, preferably second elementary filaments. However, in case the second fibers are second composite fibers their splitting degree is preferably at most 10 %, such as 1 % to 10 %, more preferably at most 5 %. This is advantageous in order to keep the layer B open enough. Nevertheless, it is preferred that the second composite fibers are at least partially splitted. Preferably, the splitting degree of the second composite fibers is at least 1 %, such as 1 to 10 %, more preferably 1 to 5 %. This is advantageous because the presence of small fibers also in layer B improves the adhesion between layer A and layer B due to a better entanglement.

In a preferred embodiment, as well the first fibers as the second fibers are melt-spun composite fibers which are splitted to at least some extent to produce elementary fibers and the at least one layer A and the at least one layer B are joined to each other by hydroentanglement. In this embodiment, preferably, the splitting degree of the second composite fibers is 1 to 10 %, more preferably 1 to 5 %. Preferably, the splitting degree of the first composite fibers is at least 90 %, more preferably, at least 95 %, in particular at least 98 %. Preferably, the splitting degree of the second composite fibers is lower than the splitting degree of the first composite fibers. This can be achieved for example by adjusting the power of the water jets. Since at least one outer layer is formed by layer A, the first composite fibers are subjected to higher water jet pressure than layer B. Also, the power of the water jets can be adjusted so that one side of the nonwoven is subjected to higher water jet pressure than the other side.

An advantage of using composite fibers as the starting material to produce the elementary fibers is that the titer of the elementary fibers produced therefrom can be easily adjusted by varying the number of the elementary fibers contained in the composite fibers. Here, the titer of the composite fibers can remain constant, which is advantageous from a procedural point of view. A further advantage of using the composite fibers is also that by varying the degree of splitting of the composite fibers, it is possible to easily control the ratio of relatively thick and relatively thin fibers in the microfiber composite fabric.

Preferably, the first fibers and optionally the second fibers are composite fibers which have been splitted, preferably by fluid jets, in particular water jets. Further preferably, at least one layer A and at least one layer B have been joined to each other by hydroentanglement whereby simultaneously the first fibers and optionally the second fibers have been splitted.

In a preferred embodiment the first fibers of layer A at least partially penetrate into the pores of the layer B and are at least partly intertwined with the second fibers and/or yarns of layer B ("tentacle effect"). This effect can be achieved, for example, by first forming a layer composite AB or also larger layer composites, for example a layer composite ABA, ABABA, etc., from layer(s) A and layer(s) B which are initially still unconsolidated or merely preconsolidated, and then carrying out a splitting or consolidation step for the entire layer composite.

In this procedure, the fibers of the first and/or second layer A can be distributed in the Z-direction, i.e., in the direction of the cross-section of the microfiber composite. This distribution may comprise several layers and leads to a particularly intensive bonding of the individual layers. Practical tests have shown that the finer fibers, the further they are transported into the other layers.

By splitting the first and optionally the second melt-spun composite fibers elementary fibers are formed. In this respect, the elementary fibers can be formed in the shape of a segment of a circle, or n-angled or multi-lobally in cross section.

The nonwoven composite fabric is preferably one in which the first composite fibers and optionally the second composite fibers have a cross section having a multisegmented structure like orange segments, also known as "pie", where the segments can contain different, alternating, incompatible polymers. Hollow pie structures are also suitable, which can also have an asymmetrically axially extending cavity. Pie structures, in particular hollow pie structures, can be split particularly easily. Hollow pie structures are also suitable, which can also have an asymmetrically axially extending cavity.

In this respect, the pie arrangement advantageously has 2, 4, 8, 16, 24, 32, 48 or 64 segments, particularly preferably 4, 8, 16, 24, 32 segments, in particular 4, 8, 16, 32 segments.

To achieve easy splitability, it is advantageous if the first composite fibers and optionally the second composite fibers contain at least one, preferably at least two thermoplastic polymers. The composite fibers preferably comprise at least two incompatible polymers. The term "incompatible polymers" is understood to mean polymers which, when combined, produce non-adhering, partially or difficultly adhering pairings. A composite fiber of this type has good splitability into elementary fibers and produces a favorable ratio of strength to weight per unit area. Partially or difficultly adhering pairings are present when the composite fibers having these pairings split more easily than in the case of a composite fiber which consists of only one of the polymers used.

Polyolefins, polyesters, polyamides and/or polyurethanes are preferably used as incompatible polymer pairs in such a combination that non-adhering, partially or difficultly adhering pairs are produced.

The polymer pairs which are used are particularly preferably selected from polymer pairs having at least one first polyolefin, preferably polypropylene, and/or at least one polyamide, preferably polyamide 6, on the one hand, and at least one second polyolefin, preferably polypropylene or at least one polyester, preferably polyethylene terephthalate, on the other hand.

Polymer pairs having polypropylene, such as polypropylene/polyethylene, polypropylene/polyamide 6, and/or polypropylene/polyethylene terephthalate are particularly preferred.

Polymer pairs having at least one polyester, preferably polyethylene terephthalate and/or at least one polyamide, preferably polyamide 6, are also particularly preferred.

Polymer pairs having at least one polyamide and/or having at least one polyethylene terephthalate are preferably used due to their limited adhesiveness and polymer pairs having at least one polyolefin are particularly preferably used due to their poor adhesiveness.

The following have proven to be particularly expedient as particularly preferred components: polyesters, preferably polyethylene terephthalate, polylactic acid and/or polybutylene terephthalate, on the one hand, polyamide, preferably polyamide 6, polyamide 66, polyamide 46, on the other hand, optionally combined with one or more further polymers that are incompatible with the above-mentioned components, preferably selected from polyolefins. This combination has outstanding splitability. The combination of polyethylene terephthalate and polyamide 6 or of polyethylene terephthalate and polyamide 66 is very particularly preferred.

Options for producing microfilament layers of split composite fibers are known to a person skilled in the art and are described, for example, in EP 0814188 A1 and EP 1619283 A1.

According to a further embodiment of the invention the nonwoven composite fabric comprises at least one layer A and at least one layer B, wherein at least one surface layer of the nonwoven composite fabric is formed by layer A, wherein layer A is the first nonwoven fabric, and wherein
a) layer A comprises first fibers, preferably first filaments, being first melt-spun composite fibers which are splitted to at least some extent to produce first elementary fibers having an average titer of at most 0.2 dtex, wherein the amount of the first fibers is 10 wt.% to 35 wt.% based on the total weight of the nonwoven fabric;
b) layer B comprises
   b2) a woven grid comprising yarns having an average titer from 500 dtex to 2200 dtex, wherein the amount of the yarns is 20 wt.% to 90 wt.%, preferably 65 wt.% to 90 wt.% based on the total weight of the nonwoven fabric.

For this embodiment, preferably the amount of the yarns is 30 wt. % to 60 wt. %, or 40 wt. % to 70 wt. %, or 70 wt.% to 85 wt.%, in particular 70 wt.% to 80 wt.% based on the total weight of the nonwoven composite fabric.

It is also possible that layer B comprises as well second fibers, preferably second filaments, with an average titer from 0.25 to 10 dtex, preferably 0.25 to 3,5 dtex, and a woven grid comprising yarns having an average titer from 500 dtex to 2200 dtex. In this case the combined amount of the second fibers and of the yarns is 65 wt.% to 90 wt.% based on the total weight of the nonwoven composite fabric.

According to the invention, at least one, preferably both surface layer(s) of the nonwoven composite fabric is formed by layer A. This allows for the average titer of the fibers on at least one surface layer being smaller than the average titer in at least one inner layer because layer A comprises elementary fibers having an average titer of at most than 0.2 dtex, whereas layer B comprises fibers with a higher titer.

According to a preferred embodiment of the invention the nonwoven composite fabric has at least one fiber titer gradient along the Z- direction. Z-direction means across the thickness of the fabric. Fiber titer gradient means that the titer of the fibers in the nonwoven composite fabric increases and/or decreases along a specific direction, here the Z-direction. The increase and/or decrease may be continuous and/or discontinuous. For example, in a discontinuous increase or decrease the titer of the fibers may remain equal within some parts of the composite fabric but increase or decrease in other parts.

Further, in a preferred embodiment the fiber titer increases, preferably discontinuously, from at least one main side of the nonwoven composite fabric to its center.

Preferably, the gradient i.e. the decrease and/or increase of the fiber titer is discontinuous. In one embodiment such discontinues fiber titer gradient can be achieved by a layered structure of the nonwoven composite fabric. Accordingly, in one embodiment the nonwoven composite fabric has a layered structure. It has to be noted that also in a layered structure the fibers of the different structure are preferably intermingled at least at the interface. Such interminglement can be achieved by hydroentanglement of the nonwoven composite fabric. A layered structure can be identified optically because if a layered structure is present, it can be seen that there are two different layers A and B in the nonvowen composite fabric. Since the mean fiber titers are different in layer A and layer B such layered structure leads to a fiber titer gradient.

The nonwoven composite fabric can also have more than one fiber titer gradient within its structure. E.g. the fiber titer may decrease in the direction from at least one main side of the nonwoven composite fabric to its center in some parts of the nonwoven but increase in the direction from at least one main side of the nonwoven composite fabric to its center in other parts.

According to a further preferred embodiment of the invention the nonwoven composite fabric has a porosity gradient along the z direction. Z-direction means across the thickness of the fabric. Porosity gradient means that the porosity of the nonwoven composite fabric increases and/or decreases along a specific direction here the Z-direction. The increase and/or decrease may be continuous and/or discontinuous. For example, in a discontinuous increase or decrease the porosity of the fibers may remain equal within some parts of the composite fabric but increase or decrease in other parts.

Further, preferably, the porosity increases from at least one main side of the nonwoven composite fabric to its center.

Preferably, the gradient i.e. the decrease and/or increase of the porosity is discontinuous. In one embodiment such discontinuous porosity gradient can be achieved by a layered structure of the nonwoven composite fabric. If the porosity is different in layer A and layer B such layered structure may lead to a porosity gradient.

The nonwoven composite fabric can also have more than one porosity gradient within its structure. E.g. the porosity may decrease in the direction from at least one main side of the nonwoven composite fabric to its center in some parts of the nonwoven but increase in the direction from at least one main side of the nonwoven composite fabric to its center in other parts.

In a preferred embodiment the first capillary medium, in particular the first capillary medium being a nonwoven composite fabric, has a vertical capillarity in seconds measured based on standard AATCC 197 as explained in the section measurement methods of less than 20 seconds, more preferably from 4 seconds to 12 seconds, each in at least one direction MD and/or CD, preferably in both directions. Also preferably, it has a vertical capillarity at least in MD direction of less than 20 seconds.

In a further preferred embodiment the first capillary medium, in particular the first capillary medium being a nonwoven composite fabric, has a horizontal capillarity after 4 hours measured as explained in the section measurement methods of at least 20 cm, preferably at least 40 cm, in particular at least 60 cm, each in at least one direction MD and/or CD, preferably in both directions.

In a further preferred embodiment of the invention the first capillary medium has a thickness measured according to DIN EN ISO 9073-2:1997-02 from 0.1 mm to 3 mm, preferably from 0.1 mm to 2 mm, more preferably from 0.1 mm to 1,5 mm, in particular 0.1 mm to 1 mm.

In a further preferred embodiment of the invention the first capillary medium being a nonwoven composite fabric has a thickness measured according to DIN EN ISO 9073-2:1997-02 from 0.3 mm to 3 mm, preferably from 0.5 mm to 2 mm.

In a further preferred embodiment of the invention the layer B has a thickness measured according to DIN EN ISO 9073-2:1997-02 from 0.1 mm to 2 mm, preferably from 0.1 mm to 1 mm.

In a further preferred embodiment of the invention layer A has a thickness measured according to DIN EN ISO 9073-2:1997-02 from 0.05 mm to 1 mm, preferably, from 0.05 mm to 0.5 mm.

In a further preferred embodiment of the invention the first capillary medium has a weight per unit area measured according to ISO 9073-1:1989-07 from 10 g/m² to 500 g/m², preferably from 10 g/m² to 400 g/m², more preferably from 10 g/m² to 300 g/m², more preferably from 10 g/m² to 200 g/m², in particular 20 g/m² to 160 g/m².

In a further preferred embodiment of the invention the first capillary medium consists of first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex and has a weight per unit area measured according to ISO 9073-1:1989-07 from 10 g/m² to 300 g/m², preferably from 10 g/m² to 200 g/m², in particular 10 g/m² to 200 g/m².

In a further preferred embodiment of the invention the first capillary medium being a nonwoven composite fabric has a weight per unit area measured according to ISO 9073-1:1989-07 from 50 g/m² to 500 g/m², preferably from 100 g/m² to 400 g/m².

In a further preferred embodiment of the invention layer A has a weight per unit area measured according to ISO 9073-1:1989-07 from 10 g/m² to 300 g/m², preferably from 10 g/m² to 200 g/m².

In a further preferred embodiment of the invention the first capillary medium being a nonwoven composite fabric has a mechanical stability (tensile strength), measured in N/5cm according to DIN EN ISO 13934-1 - 2013-08 from 100 N/5cm to 2000 N/cm, preferably from 300 N/5cm to 1500 N/5cm, each in at least one direction MD or CD, preferably in both directions.

In a further preferred embodiment of the invention the splitting degree of the first fibers is at least 90%, more preferably, at least 95%, in particular at least 98%. This embodiment is advantageous because hereby capillarity, water transportation, in particular water distribution capacity and controlled moisture management is high. It is further preferred that the content of elementary fibers of layer A is from 90 wt.% to 100 wt.%, more preferably from 95 wt.% to 100 wt.%, in particular from 98 wt.% to 100 wt.%, based on a total weight of layer A.

In a preferred embodiment the content of elementary y fibers of layer B is below 10 wt.%, preferably from 1 to 10 wt.%, more preferably from 1 wt.% to 5 wt.%, based on a total weight of layer B.

As mentioned above, it is preferred that at least one layer A and at least one layer B are joined to each other by entanglement, preferably by hydroentanglement. This is advantageous because it stabilizes the nonwoven composite fabric.

In a simple embodiment of the invention, the nonwoven composite fabric consists only of layer A and layer B. However, to optimize the properties, it can be advantageous that layers A and B are integrated in a multi-layered material. Accordingly, in a preferred embodiment the nonwoven composite fabric comprises more than one layer A and/or more than one layer B and/or further layers which are different from layer A or B. Further layers which are different from layer A or B can be selected from nonwovens, such as spunbond, needle-punched, spunlace, and wetlaid nonwovens, wovens, such as microfiber based wovens or not microfiber based wovens, knitted fabrics such as microfiber based knitted fabrics or not microfiber based knitted fabrics.

As explained above, in a particularly preferred embodiment the nonwoven composite fabric comprises at least one further layer A. What is said herein in relation to layer A shall also apply to further layer A. In a nonwoven composite fabric comprising as well at least one layer A as at least one further layer A the structure of both layers A can be chosen independently from another. Preferably, further layer A is positioned on that side of layer B facing away from layer A. Further preferred both surface layers of the nonwoven composite fabric are formed by layer A. Accordingly, a preferred structure is ABA.

In a further preferred embodiment the nonwoven composite fabric has through-pores. They can be formed by water jets and facilitate water permeability.

In a preferred embodiment the nonwoven composite fabric is produced by a method comprising
A) providing at least one layer A comprising first fibers, preferably first filaments, being first melt-spun composite fibers which are splittable to at least some extent to produce first elementary fibers having an average titer of at most 0.2 dtex wherein preferably the amount of the first fibers is 10 wt.% to 35 wt.% based on the total weight of the nonwoven composite fabric;
B) providing at least one layer B comprising
   B1) second fibers, preferably second filaments, with an average titer from 0.25 to 10 dtex, preferably 0.25 to 3.5 dtex, wherein the amount of the second fibers preferably is 65 wt.% to 90 wt.% based on the total weight of the nonwoven composite fabric; or
   B2) a woven grid comprising yarns, preferably filaments having an average titer from 500 dtex to 2200 dtex; wherein the amount of the yarns preferably is 20 wt.% to 90 wt.%, preferably 65 wt.% to 90 wt.% based on the total weight of the nonwoven composite fabric; or
   B3) second fibers, preferably second filaments, with an average titer from 0.25 to 10 dtex and a woven grid comprising yarns, preferably filaments having an average titer from 500 dtex to 2200 dtex, wherein the combined amount of the second fibers and of the yarns preferably is 65 wt.% to 90 wt.% based on the total weight of the nonwoven composite fabric;
C) positioning layers A and B one on top of the other, thereby forming at least one, preferably both, surface layer(s) by the layer A;
D) treating layers A and B with jets of fluid, preferably water jets, whereby at least the first fibers are entangled and splitted at least to some extent to produce elementary fibers having an average titer of at most 0.2 dtex whereby a nonwoven composite fabric is obtained.

In a preferred embodiment, in step D the layers A and B are joined to each other through the treatment with jets of fluid.

In a preferred embodiment the nonwoven composite fabric produced by the process is a nonwoven composite fabric according to one or more of the embodiments described herein.

For example, in a preferred embodiment the nonwoven composite fabric produced by the process is a nonwoven composite fabric wherein the second melt-spun fibers are melt-spun composite fibers with a splitting degree of 1 to 10 %.

In a preferred embodiment the inventive water retention and distribution unit is used to retain and distribute water. The unit is thus applicable for moisture management.

The unit can be used as such, and/or it can be configured to be modular. A modular unit can be combined with at least one further modular unit thereby forming a modular water retention and distribution system. The present invention also includes a modular water retention and distribution system comprising at least two water retention and distribution units configured to be modular. Modular systems are advantageous because they provide flexibility, easy maintenance, cost efficiency, and scalability. They can be adapted to various needs, expanded as required, and repaired easily by replacing individual modules. The preferred embodiments described herein for the inventive water retention and distribution unit are also applicable to modular water retention and distribution systems mutatis mutandis.

In a preferred embodiment, the water retention and distribution unit is used for moisture management in an irrigation system, in particular a green roofing system, a vertical garden system and/or in a blue roofing system.

Preferably, for the moisture management in a blue roofing system the inventive water retention and distribution unit is positioned under a vegetative layer. The first capillary medium helps to retain and manage water within the blue roofing system, allowing it to infiltrate and distribute evenly, thereby optimizing water storage and release. It can also act as a drainage or filtration layer, preventing debris accumulation and ensuring efficient water flow.

For moisture management in an irrigation system the inventive water retention and distribution unit is preferably placed in water conducting connection with a vegetative layer. The inventive unit can serve as a water source due to the presence of the water retention device. Within the inventive unit the first capillary medium can function as sub-surface irrigation membrane that transports water to plant roots. Plants shall be understood in a broad way to encompass all living organisms that cannot move and carry out photosynthesis including fungi. Generally, the inventive water retention and distribution unit can be used in association with natural and/or artificial soil.

A preferred irrigation system is a green roofing system. For moisture management in a green roofing system the inventive water retention and distribution unit is preferably placed below the vegetative layer. The first capillary medium can help to retain moisture within and to irrigate the vegetative layer by allowing water to infiltrate and distribute evenly, promoting healthy plant growth. It can also act as a drainage or filtration layer, preventing soil erosion and clogging.

A further preferred irrigation system is a vertical garden system. For moisture management in a vertical garden system the inventive unit fabric is preferably placed behind the vegetative layer. The first capillary medium can serve as a water retention, water distribution and/or drainage medium. The first capillary medium can also help to regulate moisture levels, allowing plants to receive water while preventing excess water buildup and promoting healthy root growth.

The present invention further relates to a method to control the movement of water in an irrigation system, in particular a green roofing system, a vertical garden system and/or in a blue roofing system wherein the inventive water retention and distribution unit according to one or more of the embodiments described herein is positioned under and/or behind a vegetative layer. Preferably, the method comprises to temporarily retain and distribute water.

In a blue roofing system the inventive water retention and distribution unit helps to avoid flooding. In a preferred embodiment the movement of water in a blue roofing system is controlled and the inventive water retention and distribution unit is positioned under a vegetative layer. Further preferably, water, in particular rain water, is temporarily retained in the water retention device and the water is distributed by the first capillary medium.

In an irrigation system the inventive water retention and distribution unit helps to manage water resources by temporarily storing and evenly distributing water, ensuring consistent hydration for crops, reducing water waste, and preventing soil erosion. In a preferred embodiment the movement of water in an irrigation system system is controlled and the inventive water retention and distribution is positioned under and/or behind a vegetative layer. Further preferably, water, in particular rain water and/or water from an artificial water source is temporarily retained in the water retention device and distributed by the first capillary medium to a vegetative layer.

A vegetative layer is a layer of soil, intended to be planted and/or planted with plants. The soil can be natural and/or artificial such as stones and/or nutriment, optionally fixed on a carrier such as fibers. The vegetative layer can be the top layer in a green roof, the layer of a vertical garden system intended to be planted and/or planted with plants and/or the filling of a bag, e.g. formed by a microfilament nonwoven fabric. Water shall also include water vapour.

In the inventive method the inventive water retention and distribution unit preferably is positioned in such a way that transport of water from the water retention device through the first capillary medium to the vegetative layer is possible. Due to the high capillarity of the first capillary medium the water coming from the water retention device is distributed in plane of the first capillary medium and can further spread into the vegetative layer. This allows to efficiently irrigate the vegetative layer in irrigation systems.

The inventive water retention and distribution unit is preferably positioned in such a way that transport of water from the water retention device through the first capillary medium to the vegetative layer is possible. The first capillary medium can help to retain moisture within and to irrigate the vegetative layer by allowing water to infiltrate and distribute evenly, promoting healthy plant growth. It can also act as a drainage or filtration layer, preventing soil erosion and clogging.

When the vegetative layer is horizontal such as in blue or green roofing systems the inventive water retention and distribution unit preferably is positioned with a side of the plate including the opening of at least one empty volume facing upward. Furthermore, the inventive water retention and distribution unit is preferably positioned under the vegetative layer. When the vegetative layer is not horizontal such as in vertical garden systems the positioning behind a vegetative layer is preferably such that a side of the plate covered by a first capillary medium faces the vegetative layer. If the inventive water retention and distribution unit is placed under and/or behind the vegetative layer, it benefits from enhanced protection against debris.

For irrigation systems also an additional water source can be integrated under and/or behind the vegetative layer.

Preferably, the inventive method comprises to position the inventive water retention and distribution unit in such a way that the first capillary medium and the vegetative layer are in water conducting connection. This allows efficient transition of water from the first capillary medium to the vegetative layer. Preferably, both layers are directly adjacent to each other without any intermediate layer. However, intermediate layers are possible as long as they do not inhibit the water conducting connection.

In a preferred embodiment the water retention and distribution unit comprises at least one water conducting connection between the interior of the at least one empty volume and the first capillary medium. Such water conducting connection allows that water from the interior of the empty volume is transported to the first capillary medium and can be further distributed in its plane. "In plane" means the X/Y direction of the first capillary medium. The water can be distributed over the whole surface or only over parts of it. In a preferred embodiment the water conducting connection is made using the first capillary medium itself. For this purpose, in a preferred embodiment, the first capillary medium is arranged in such a way that parts of it extend into the interior of the empty volume. To this end it is preferred that the first capillary medium conforms at least partly to the three-dimensional structure of the plate in such a way that parts of it extend into the interior of the empty volume. This allows to dispense with additional water conducting connections between the interior of the empty volume and the first capillary medium.

In a further embodiment the water conducting connection is performed by a second capillary medium, preferably a second nonwoven fabric which is not a part of the first capillary medium. The further capillary medium may be structurally the same or different from the first capillary medium. A preferred second capillary medium is a microfilament nonwoven fabric, in particular in the form of a stripe. In order to make the water conducting connection the second capillary medium preferably is contacted with the first capillary medium and a water reservoir, preferably in that at least parts of the second capillary medium extend into the interior of the empty volume. In doing so the capillary effects can transport the water from the interior of the empty volume via the second capillary medium to the first capillary medium. Specifically, the second capillary medium can constitute a wick for the rise of liquid by capillarity from a water reservoir towards the first capillary medium resting on at least one side of the water retention device.

In the following non-limiting examples of the invention are explained with reference to the appended schematic drawings, in which:

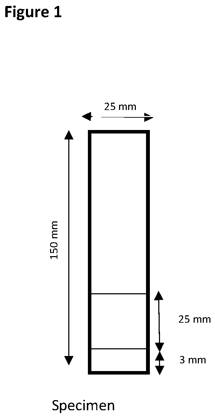

Figure 1 is a schematic view of a composite nonwoven with a sample dimension : 25 mm X 150 mm.

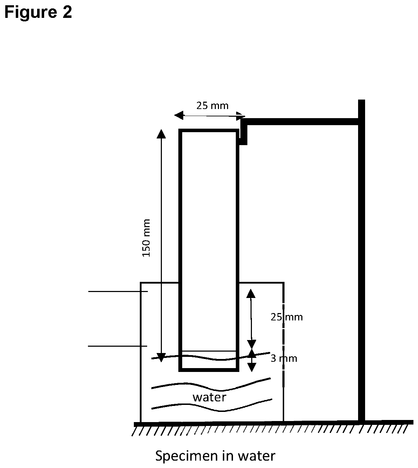

Figure 2 shows the composite nonwoven of Figure 1 being placed in water.

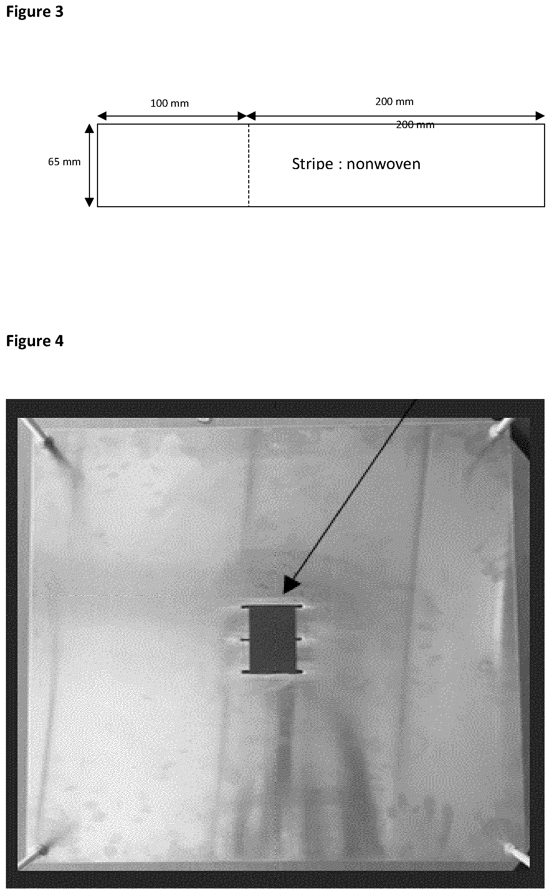

Figure 3 indicates the dimensions of a connecting stripe used to make a water conducting contact between an inventive nonwoven composite fabric and a water reservoir to measure horizontal capillarity.
Figure 4 shows a photo from a metal support provided with the stripe (arrow) from above.

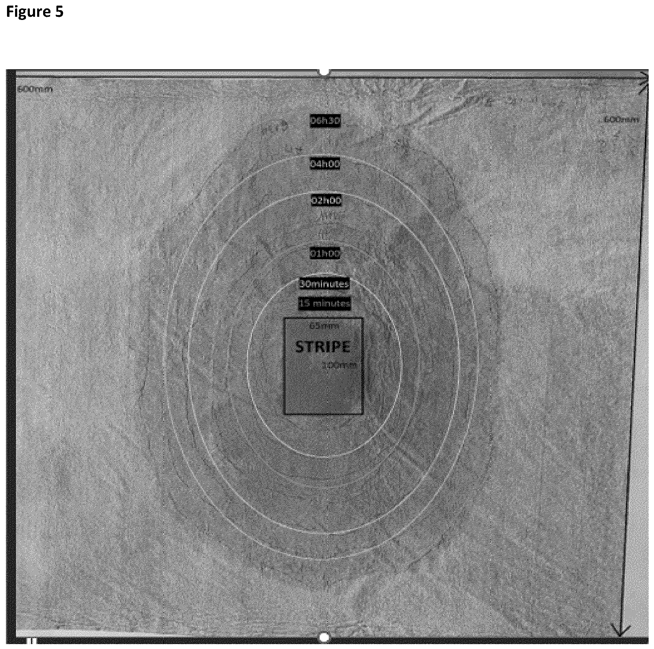

Figure 5 shows a photo from the test results of the horizontal capillarity of the nonwoven composite fabric. Those parts of the nonwoven reached by water have a darker color.

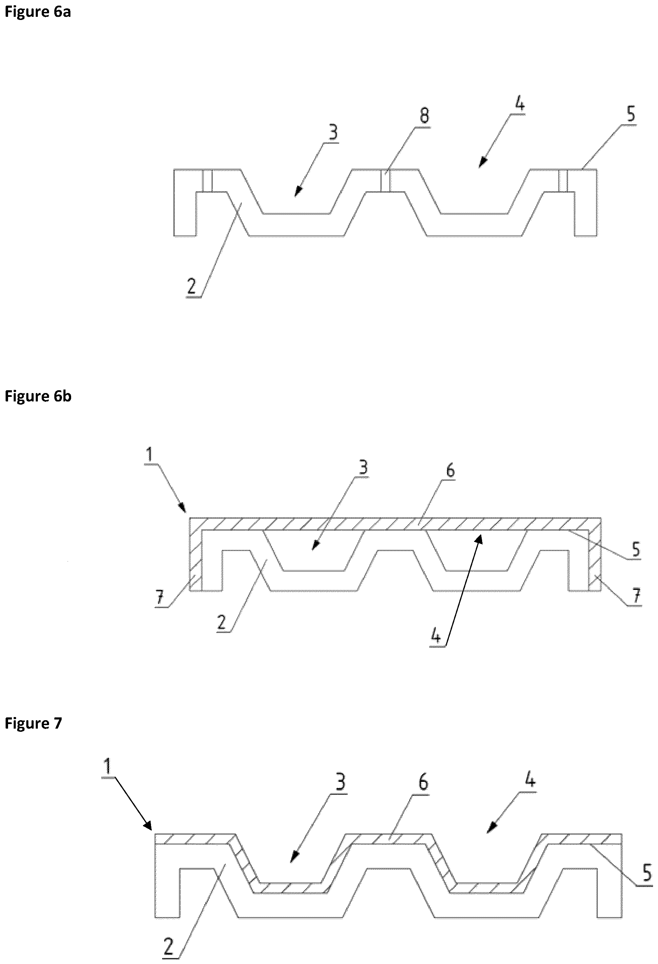

Figure 6a provides a schematic lateral view of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3). The water retention device includes channels (8) designed for drainage and/or ventilation positioned at the apex of upwardly angular sections.
Figure 6b provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein one side (5) of the plate (2) which here is the water retention side, is covered by a first capillary medium (6) which comprises a first nonwoven fabric comprising first filaments, being first melt-spun composite filaments, which are splitted to at least some extent to produce first elementary filaments, having an average titer of at most 0.2 dtex, wherein the first capillary medium (6) is bonded to one side of the plate (2). The first capillary medium (6) comprises lateral portions (7) which extend beyond the edge and along the side of the lateral sides of the plate said lateral portions (7) of first capillary medium (6) constituting a wick for the rise of liquid by capillarity towards the part of the first capillary medium (6) resting on one face of said plate (2).
Figure 7 provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein one side (5) of the plate (2) which is the water retention side, is covered by a first capillary medium (6) wherein the first capillary medium (6) conforms to the three-dimensional structure of the plate (2).

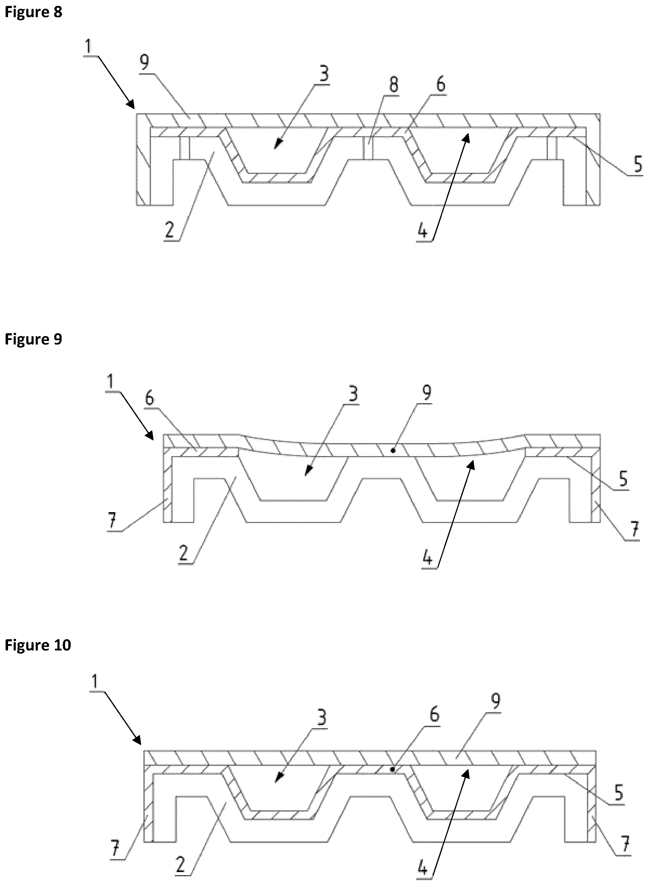

Figure 8 provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3). The first capillary medium (6) is bonded to one side of the plate (2) and conforms to the three-dimensional structure of the plate (2). The water retention device includes channels (8) designed for drainage and/or ventilation positioned at the apex of upwardly angular sections. The water retention and distribution unit (1) comprises a third capillary medium (9) which is positioned on one side (5) of the plate and on top of the first capillary medium (6). The third capillary medium (9) does not conform to the three-dimensional structure of the plate (2) but comprises lateral portions which extend beyond the edge and along the side of the lateral sides of the plate said lateral portions of the third capillary medium (9) constituting a wick for the rise of liquid by capillarity towards the first capillary medium (6) resting on one face of said plate (2).
Figure 9 provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3). The first capillary medium (6) is bonded to parts of one side of the plate (2) and comprises lateral portions (7) which extend beyond the edge and along the side of the lateral sides of the plate (2). The water retention and distribution unit (1) comprises a third capillary medium (9) which is positioned on one side (5) of the plate and on top of the first capillary medium (6).
Figure 10 provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein one side (5) of the plate (2) which is the water retention side, is covered by a first capillary medium (6) bonded to the side of the plate (2). The first capillary medium (6) comprises lateral portions (7) which extend beyond the edge and along the side of the lateral sides of the plate said lateral portions of said first capillary medium (6) constitute a wick for the rise of liquid by capillarity.

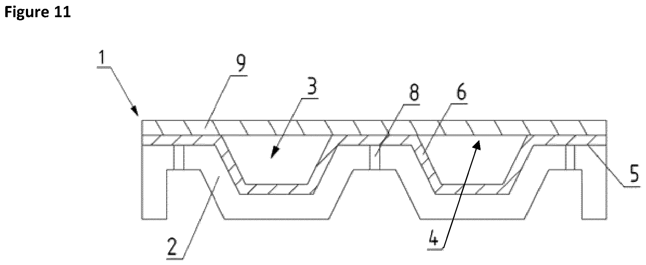

Figure 11 provides a schematic lateral view of an inventive water retention and distribution unit (1) comprising a water retention device in the form of a plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein one side (5) of the plate (2) which is the water retention side, is covered by a first capillary medium (6) bonded to the side of the plate (2). The water retention device includes channels (8) designed for drainage and/or ventilation positioned at the apex of upwardly angular sections.

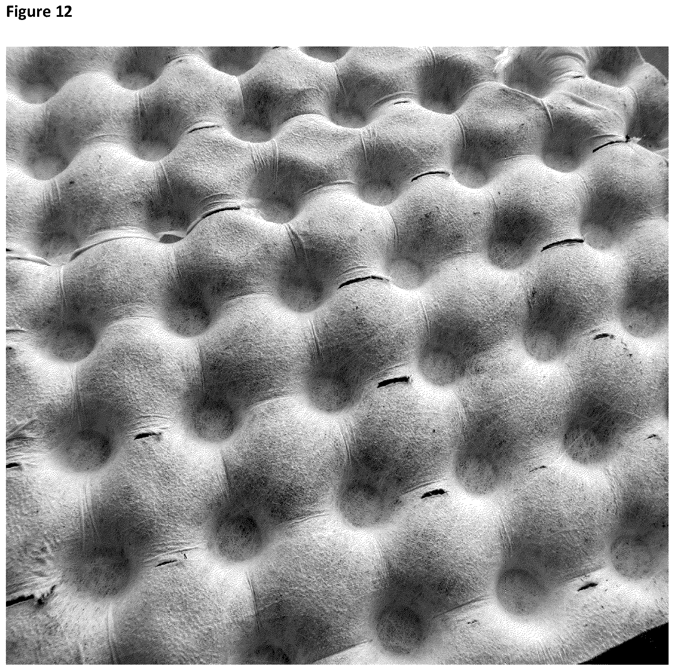

Figure 12 shows a photo from an oblique angle of an inventive water retention and distribution unit wherein the first capillary medium is bonded to the plate and conforms to its three-dimensional structure. The plate is configured in the manner of an egg carton.

### Example 1: Preparation of a composite nonwoven fabric

A composite nonwoven fabric has been prepared with the following composition:
a) Two layers A are provided each comprising first filaments, being first melt-spun composite filaments. The amount of the first fibers (i.e. from layer A and the second layer A taken together) is 25 wt.% based on the total weight of the nonwoven fabric;
b) One layer B is provided comprising
b1) second filaments being composite filaments, with an average titer of 2,5 dtex wherein the amount of the second fibers is 75 wt.% based on the total weight of the nonwoven fabric.

Layers A, B and the second layer A are positioned one on top of the other, thereby forming both surface layers by layers A and the middle layer by layer B.

The composite ABA is treated with jets of fluid, preferably water jets, whereby the first fibers are entangled and splitted to more than 90% to produce first elementary filaments having an average titer of 0.15 dtex and whereby the second fibers are entangled and splitted to less than 5 %. Further, the first fibers of layers A at least partially penetrate into the pores of the layer B and at least partly intertwine with the second fibers of layer B ("tentacle effect").

The resulting composite nonwoven has a thickness of 1 mm, a tensile strength (MD) of 574 N/5cm and a vertical capillarity of 6 seconds (MD) and of 5 seconds (CD).

### Example 2: Measurement of horizontal capillarity of the composite nonwoven fabric

The horizontal capillarity of the composite nonwoven fabric is tested. The results are shown in Fig. 5. Here, those parts of the nonwoven reached by water are darker. The water distribution is measured in distance (MD/CD) starting from the end of the stripe and in correlation to the time to achieve that distance.

The observed water distribution was 17 cm in MD and 12 cm in CD after 4 hours.

A needle-punched nonwoven based on macrofilament staple fibers (3 mm) had a water distribution of 1.8 cm in MD and 0,8 cm in CD after 4 hours. Further it had a tensile strength (MD) of 400 N/5cm and a vertical capillarity of 675 seconds (MD) and of 9 seconds (CD).

### Methods of measurement

### Vertical Capillarity

The vertical capillarity is measured based on standard AATCC 197 (Test Method for Vertical Wicking Rate of Textiles: to Specified Distances).

The following conditions are used:
- Composite nonwoven sample dimension : 25 mm X 150 mm (see Fig. 1)
- 4 Samples in MD
- 4 Samples in CD
   » distributed equally on nonwoven roll width.
- Each sample is marked with a felt-tip pen (see Fig. 1).

### Procedure:

- The sample is placed in water (see Fig. 2).
- The chronometer is started when the water has reached the first mark of the sample (3 mm)
- The chronometer is stopped when the water has reached the second mark.
- The results are recorded in a table, then repeated for each sample.
- The average value of the 4 MD/4 CD samples is calculated.

### Horizontal Capillarity

The following conditions are used:
An nonwoven composite fabric (600 mm X 600 mm) is placed on a horizontal metal support. A water reservoir is positioned under the metal support without any direct contact to the nonwoven. To make a water conducting contact between the nonwoven composite fabric and the water reservoir a connecting stripe (65 mm X 300 mm) is used. The connecting stripe is a water conducting microfilament nonwoven fabric placed between the nonwoven composite fabric and the metal support. To allow the connecting stripe to penetrate the metal support it is provided with a slot.

The stripe is pulled partly through the metal support so that from the stripe 65 mm X 100 mm are in contact with the nonwoven (i.e. horizontally positioned under it) and 200 mm are hanging down vertically and are partially submerged in water from the water reservoir. The vertical part of the stripe allows the water to rise. The rest of the stripe (100 x 65 mm) being under and in contact with the nonwoven allows the water to pass over to it. Figure 3 indicates the dimensions of the stripe. Fig. 4 shows a photo from the metal support provided with the stripe (arrow) from above. To be able to detect the water distribution in the nonwoven colored water is used (blue).
- The chronometer is started when the end of the vertical part of the stripe touches the water (the other end is in contact with the nonwoven).
- The water distribution is marked on the nonwoven every 15 minutes, up to one hour and then every hour up to 24 hours.
- The results are recorded in a table and the test is repeated for each sample.
- The MD and CD distances, measured starting from the end of the stripe are read off.

## Claims

1. Water retention and distribution unit comprising a water retention device (1) in the form of at least one plate (2) with a three-dimensional structure that creates at least one empty volume (3) for at least temporarily retaining water wherein the at least one empty volume (3) includes at least one opening (4) on at least one side (5) of the plate (2), allowing water to enter the empty volume (3), wherein at least one side (5) of the plate (2) is at least partly covered by a first capillary medium (6) which comprises a first nonwoven fabric wherein the first capillary medium (6) is bonded to at least one side (5) of the plate (2).

2. Water retention and distribution unit according to claim 1 wherein the first nonwoven fabric comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex.

3. Water retention and distribution unit according to claim 1 or 2 wherein the melting point of the first capillary medium (6) measured according to ISO 11357-3 (2018) is at least 15°C, preferably at least 20°C, in particular at least 30°C higher than the melting point of the plate (2).

4. Water retention and distribution unit according to any of the proceeding claims wherein at least 50%, preferably from 60% to 100%, more preferably from 70 to 100%, of the surface area of at least one side (5) of the plate (2) are bonded to the first capillary medium (6).

5. Water retention and distribution unit according to any of the proceeding claims wherein the at least one empty volume (3) is formed in that the plate (2) is shaped in the manner of an egg carton and/or as an open spacer construction that contains a semi-enclosed space configured to hold water in combination with external sealing elements.

6. Water retention and distribution unit according to any of the proceeding claims wherein the at least one empty volume (3) is formed in that the plate (2) is shaped to have a plurality of recessed cavities.

7. Water retention and distribution unit according to any of the proceeding claims wherein the first capillary medium (6) conforms at least partly to the three-dimensional structure of the plate (2).

8. Water retention and distribution unit according to any of the proceeding claims wherein parts of the first capillary medium (6) extend into the interior of the empty volume (3).

9. Water retention and distribution unit according to any of the proceeding claims wherein the at least one empty volume is formed in that the plate (2) is shaped to have a plurality of recessed cavities, preferably in the manner of an egg carton, and the first capillary medium (6) conforms at least partly to the structure of the cavities.

10. Water retention and distribution unit according to any of the proceeding claims wherein the first capillary medium (6) is a nonwoven composite fabric comprising at least one layer A and at least one layer B, wherein layer A is the first nonwoven fabric and wherein
layer B comprises
b1) second fibers, preferably second filaments, with an average titer from 0.25 to 10 dtex, preferably 0.25 to 3.5 dtex, or
b2) a woven grid comprising yarns having an average titer from 500 dtex to 2200 dtex, preferably from 800 dtex to 2200 dtex, or
b3) second fibers, preferably second filaments, with an average titer from 0.25 to 10 dtex and a woven grid comprising yarns having an average titer from 500 dtex to 2200 dtex.

11. Water retention and distribution unit according to claim 10
- wherein at least one, preferably both surface layer(s) of the nonwoven composite fabric is/are formed by layer A and
- wherein the amount of the first fibers is 10 wt.% to 35 wt.% based on the total weight of the nonwoven composite fabric and
- wherein the amount of the second fibers is 65 wt.% to 90 wt.% based on the total weight of the nonwoven composite fabric.

12. Water retention and distribution unit according to claim 10 or 11 wherein as well the first fibers as the second fibers are melt-spun composite fibers which are splitted to at least some extent to produce elementary fibers and the at least one layer A and the at least one layer B are joined to each other by hydroentanglement.

13. Water retention and distribution unit according to any of the proceeding claims wherein the water retention and distribution unit comprises a third capillary medium (8) which is arranged on that side of the first capillary medium (6) facing away from the water retention and distribution device.

14. Use of a water retention and distribution unit according to any of the proceeding claims to retain and distribute water.

15. Use according to claim 14 for moisture management in an irrigation system, in particular a green roofing system, a vertical garden system and/or in a blue roofing system.
